# EUROPEAN PATENT SPECIFICATION

(11) **EP 3 273 035 B1**
(45) Date of publication and mention of the grant of the patent: **13.05.2020**
(21) Application number: 17182147.3
(22) Date of filing: 19.07.2017
(51) Int. Cl.: F02C 7/12

(54) **GAS TURBINE ENGINE WITH HEAT PIPE FOR THERMAL ENERGY DISSIPATION**
GASTURBINENMOTOR MIT WÄRMEROHR FÜR DIE THERMISCHE ENERGIEDISSIPATION
MOTEUR À TURBINE À GAZ DOTÉ D'UN CALODUC POUR DISSIPATION DE L'ÉNERGIE THERMIQUE

(30) Priority: 22.07.2016 US 201615217381
(43) Date of publication of application: 24.01.2018
(73) Proprietor: United Technologies Corporation, Farmington, CT 06032 (US)
(72) Inventor: XU, Jinquan, East Greenwich, RI Rhode Island 02818 (US)
(74) Representative: Dehns

(56) References cited:
- GB-A- 1 516 041
- US-A- 5 269 135
- US-A1- 2004 020 213
- US-A1- 2009 169 359
- US-A1- 2015 247 462
- US-B1- 8 794 907

## Description

### BACKGROUND

Gas turbine engines operate at relatively high temperatures. Engine components that are exposed to the high temperatures may be fabricated from superalloys, may include barrier coatings, and/or may include cooling schemes to reduce component temperature.

US 2009/169359, GB 1516041, US 8794907, US 2004/020213, and US 2015/247462 relate to the preamble of the independent claim and may be useful in understanding the present disclosure.

### SUMMARY

The present invention provides a gas turbine engine as defined in claim 1.

In a further embodiment of any of the foregoing embodiments, the cooling cavity includes a discharge port that opens into the bypass duct.

In a further embodiment of any of the foregoing embodiments, the core nacelle includes an aft-sloped wall section, and the discharge port is in the aft-sloped wall section.

In a further embodiment of any of the foregoing embodiments, the first section includes at least two legs that are axially separated.

In a further embodiment of any of the foregoing embodiments, the second section is axially offset from the first section.

In a further embodiment of any of the foregoing embodiments, the component is a static component.

In a further embodiment of any of the foregoing embodiments, the tap includes an annular flow guide or passage.

A further embodiment of any of the foregoing embodiments includes a controller configured to adjust the environment in the environmentally-controllable cavity based on a temperature of the component.

A further embodiment of any of the foregoing embodiments includes the component is in a final one or two stages of the compressor section.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1A illustrates an example gas turbine engine not forming part of the present invention that has a heat pipe for dissipating thermal energy from the core of the engine.
Figure 1B illustrates an example heat pipe of the gas turbine engine of Figure 1A.
Figure 2 illustrates an example gas turbine engine in accordance with the present invention with a tap from a compressor section.
Figure 3 illustrates another example gas turbine engine not forming part of the present invention with a heat pipe that has a condensation section that is axially offset from a vaporization section.
Figure 4 illustrates another example gas turbine engine not forming part of the present invention that has a heat pipe with at least two legs that are axially spaced apart.
Figure 5 illustrates another example gas turbine engine not forming part of the present invention that has a heat pipe with a leg that extends through a guide vane of a bypass duct.
Figure 6 illustrates another example gas turbine engine not forming part of the present invention with a heat pipe for dissipating thermal energy from a compressor section.
Figure 7 illustrates another example gas turbine engine not forming part of the present invention with a heat pipe for dissipating thermal energy from a combustor.
Figure 8 illustrates another example gas turbine engine with an environmentally-controllable cavity for dissipating thermal energy from a heat pipe.
Figure 9 illustrates another example gas turbine engine not forming part of the present invention with an environmentally-controllable cavity and controller for controlling the environment of the cavity.
Figure 10 illustrates another example gas turbine engine with a heat pipe having a condensation section that is configured to dissipate thermal energy to bleed air from a tap.

### DETAILED DESCRIPTION

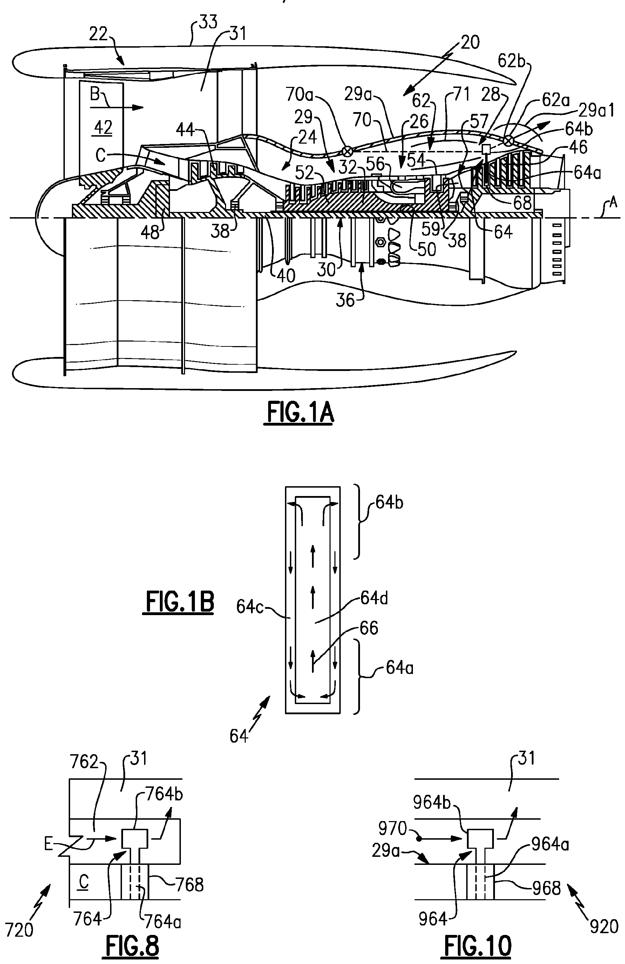

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. At least the combination of the compressor section 24, the combustor section 26, and the turbine section 28 are referred to herein as a core engine 29, although the core engine 29 may include additional sections or components. Alternative engine designs can include an augmentor section (not shown) among other systems or features.

The fan section 22 drives air along a bypass flow path B in a bypass duct 31 defined within a nacelle 33, while the compressor section 24 drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/s). In the example shown, the core engine 29 is disposed in a core nacelle 29a. The core nacelle 29a defines an inner (radial) boundary of the bypass duct 31. The core nacelle 29a may be contoured to provide a desired geometry of the bypass duct 31. In this regard, the core nacelle 29a is spaced radially outward of the core engine 29 such that there is an intermediate cooling cavity 62 outside of (i.e., not in) the bypass duct 31 and outside of (i.e. not in) the core flow path C. In this example, the cooling cavity 62 is radially between the core flow path C of the engine core 29 and the core nacelle 29a. The cooling cavity 62 spans axially from the compressor section 24 to the turbine section 28. Alternatively, the cooling cavity 62 may span with two of these sections or may span with a single one of these sections. The core nacelle 29a defines an outer (radial) boundary of the cooling cavity 62.

The engine 20 includes one or more heat pipes 64, an example of which is shown in an isolated view Figure IB. The heat pipe 64 includes a first section 64a, a second section 64b, and a working medium 66 sealed therein. The type of working medium 66 may vary, but typically will be a phase change material. For a phase change type of the working medium 66, the first section 64a may be considered a vaporization section and the second section 64b may be considered a condensation section. As an example based on the phase change type of the working medium 66, the heat pipe 64 may include a wicking region 64c and an open region 64d. For instance, the wicking region 64c may include capillaries to facilitate liquid transport of the working medium 66. In the first section 64a, the working medium 66 accepts thermal energy. For instance, the working medium 66 may vaporize from a liquid to a gas vapor in the first section 64a. The gas vapor travels through the open section 64d to the second section 64b. In the second section 64b, the working medium 66 rejects thermal energy. For example, the working medium 66 condenses from the gas phase to the liquid phase. The wicking region 64c transports the liquid working medium 66 back to the first section 64a for another cycle of vaporization/condensation. Alternatively, the working medium 66 may be a chemical reaction material that reacts in the first and second sections 64a/64b to accept/reject thermal energy. As can be appreciated, the illustrated heat pipe 64 is an example and there are other types of heat pipes that may additionally or alternatively be used. As an example, a heat pipe is generally a closed/sealed system that transports thermal energy via a working medium, in a passive manner without a mechanical pump.

The first section 64a is associated with a component 68 and is configured to accept thermal energy from the core engine 29. For instance, the component 68 is in the core engine 29 and may be located in the core gas path C, at least partially bound the core gas path C, or be exposed to hot combustion gases in the core gas path C. In this example, the component 68 is a static turbine vane in the turbine section 28, such as a vane in the second (or high) pressure turbine 54. Alternatively, the component 68 may be an outer air seal, a wall, or other non-rotating component that is subject to high temperatures in the engine 20. In one example, the component 68 is hollow and the first section 64a is located at least partially within the hollow cavity of the component 68 in order to accept and remove thermal energy from the component 68 and/or accept thermal energy transferred from the hot combustion gases in the core gas path C. For vanes or other circumferentially-arranged components, each such component 68 may have a corresponding heat pipe 64 for thermal energy removal. Additionally or alternatively, the first section 64a or a portion thereof may be integrally formed with the component 68. For instance, the hollow cavity or a portion of the hollow cavity of the component 68 may be configured as the first section 64a or a portion of the first section 64a.

The second section 64b is configured to dissipate (reject) the thermal energy in the cooling cavity 62. For instance, in this example, the second section 64b is located at least partially within the cooling cavity 62, i.e., at least a heat transfer surface of the second section 64b is exposed in the cooling cavity 62 or is located in close proximity to the cooling cavity 62 to reject thermal energy thereto.

The engine 20 further includes a tap 70 that serves to facilitate the removal of the thermal energy from the second section 64b of the heat pipe 64. For instance, the tap 70 may include an inlet port, a duct or passage, a flow guide in the cooling cavity 62, the cooling cavity 62 or portion thereof as a duct or passage, or any combination of such features. An example flow guide or passage is shown at 71. As an example, the flow guide or passage 71 may be annular. The flow guide or passage 71 may serve to guide flow of bleed air and/or diffuse the bleed air. In this example, not forming part of the present invention, the tap 70 is from the bypass duct 31 at a location forward or upstream of the second section 64b. As an example, the tap 70 may include a valve 70a or similar device that is operable to control the flow of the bleed air from the bypass duct 31 to the cooling cavity 62.

The tap 70 is configured to provide bleed air from the bypass duct 31 to the cooling cavity 62 and second section 64b to facilitate removal of the thermal energy from the second section 64b. For instance, the bleed air flows over at least a portion of the second section 64b to absorb and remove the thermal energy from the second section 64b. A single tap 70 may be used to provide bleed air to a single second section 64b. For instance, there may be a plurality of taps 70 providing bleed air to a corresponding plurality of second sections 64b of heat pipes 64 that are associated with a plurality of components 68 (e.g., a 1:1 ratio of taps to condensation sections). Alternatively, a single tap 70 may provide bleed air to multiple second sections 64b, or a single tap 70 may provide bleed air to all the second sections 64b.

The cooling cavity 62 also includes one or more discharge ports 62a that open into the bypass duct 31. The discharge port 62a may be downstream or aft of the second section 64b. For example, the discharge port 62a may include a flow control valve 62b for controlling flow from the second cavity 62 back into the bypass duct 31. There may be a plurality of discharge ports 62a, such as one discharge port 62a for each tap 70 or for each second section 64b. Alternatively, the discharge port 62a may be annular or may be an arc segment. There may be a greater number or a lesser number of discharge ports 62a than taps 70 or second sections 64b.

The tap 70 provides bleed air to remove thermal energy from the second section 64b; however, the removal of the bleed air from the bypass duct 31 penalizes thrust efficiency. The bleed air receives thermal energy from the second section 64b and increases in temperature and pressure in the closed second cavity 62. The bleed air is then released through the discharge port 62a back into the bypass duct 31 to recover at least a portion of the lost thrust. Thus, heat removal from the component 68, which might otherwise penalize engine cycle efficiency, serves for thrust recovery. Additionally, since the second section 64b is located at least partially within the cooling cavity 62, rather than in the bypass duct 31, the second section 64b does not physically disturb or impede flow in the bypass duct 31. The heat pipe 64 thus provides for a compact heat removal system that avoids physically interfering with the bypass flow.

In a further example, the discharge port 62a is shaped and/or oriented to control the direction of the discharged stream of bleed air into the bypass duct. Streaming the bleed air into the bypass duct 31 in a direction that is locally misaligned with the flow of bypass air in the bypass duct 31 potentially results in flow turbulence and/or loss of energy. Directing the stream of bleed air in a direction that is locally aligned with the flow direction of bypass air in the bypass duct 31 facilitates reduction in turbulence and/or energy loss. As an example, to permit greater local alignment of the discharged bleed air, the discharge port 62a may be located in an aft-sloped wall section 29a1 of the core nacelle 29a.

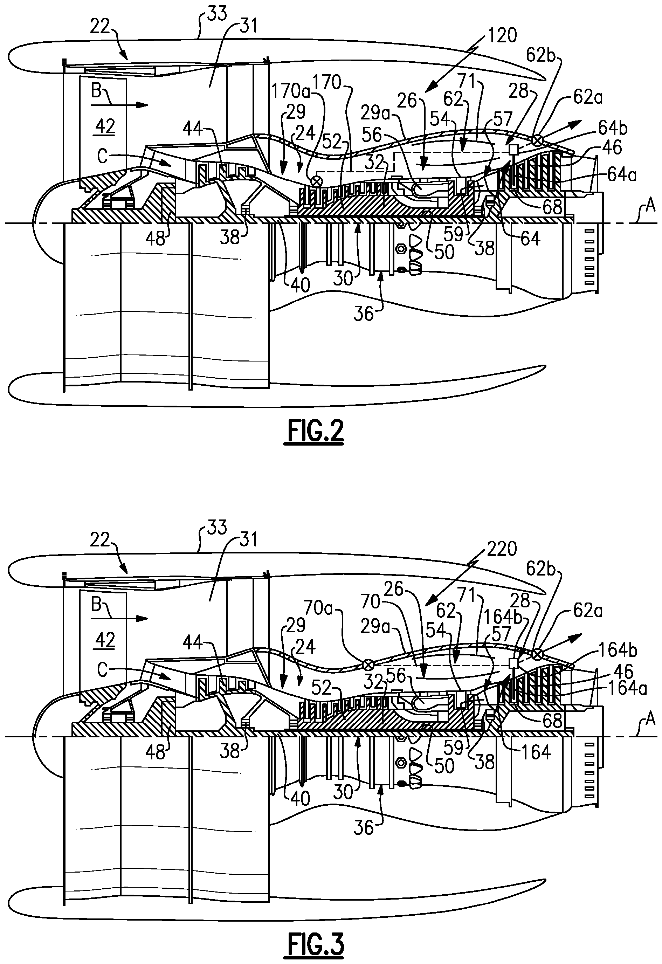

Figure 2 illustrates an example gas turbine engine 120 in accordance with the present invention. In this disclosure, like reference numerals designate like elements where appropriate and reference numerals with the addition of one-hundred or multiples thereof designate modified elements that are understood to incorporate the same features and benefits of the corresponding elements. The engine 120 is similar to the engine 20 of the prior examples but rather than the tap 70, the engine 120 includes a tap 170. In this example, the tap 170 is from the compressor section 24. The tap 170 provides compressor air as the bleed air that is used to remove the thermal energy from the second section 64b of the heat pipe 64. Similarly, the tap 170 may include a valve 170a for controlling the flow of compressor bleed air. As can be appreciated, a further example may include a combination of taps 70 and 170, i.e., a tap system which is capable of providing bleed air from the bypass duct 31, the compressor section 24, or both.

Figure 3 illustrates another example gas turbine engine 220. In this example, not forming part of the present invention, a heat pipe 164 includes a first section 164a and a second section 164b. The second section 164b is axially offset from the first section 164a. In this example, the second section 164b is axially forwardly offset from the first section 164a. Alternatively, the second section 164b is axially aftly offset from the first section 164a. For instance, the offset between the second section 164b and the first section 164a may facilitate favorable positioning or orienting of the second section 164b in the cooling cavity 62. In this regard, to provide the offset, the heat pipe 164 may include one or more turns and/or one or more sloped sections that serve to displace the second section 164b axially relative to the first section 164a.

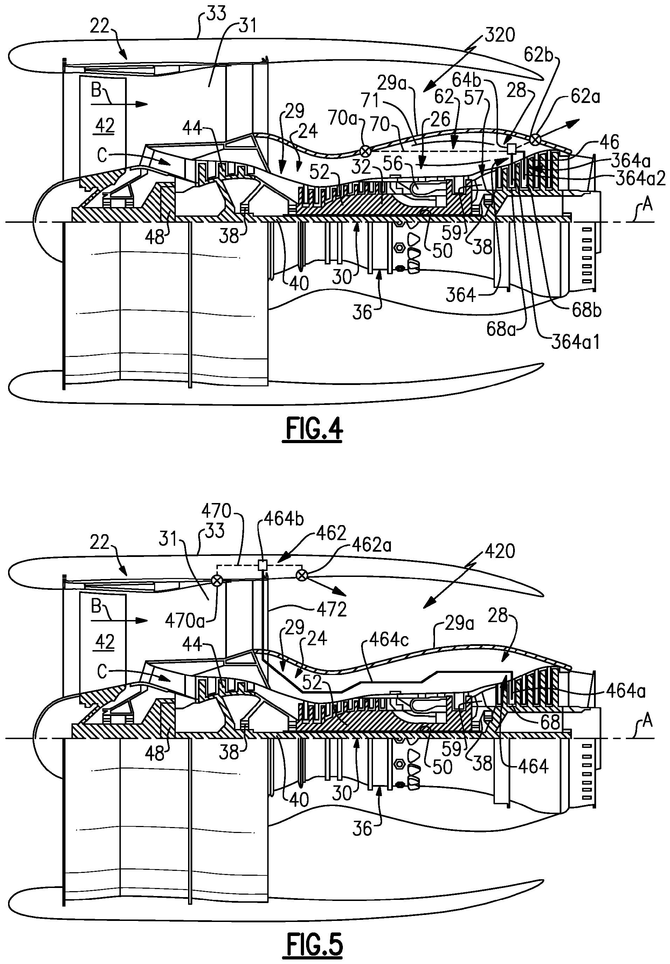

Figure 4 illustrates another example gas turbine engine 320. In this example, not forming part of the present invention, the engine includes a heat pipe 364 with a multi-region first section 364a. The first section 364a includes first and second legs 364al/364a2. The legs 364al/364a2 are axially spaced apart from each other. The leg 364al is associated with the component 68a, similar to the first section 64a/164a of the prior examples. The leg 364a2 is associated with another component 68b. For instance, the component 68b is a turbine vane in another stage of the turbine section 28. The component 68a may be a forward turbine vane and the component 68b may be an aft turbine vane. The legs 364al/364a2 may be at least partially in the components 68a/68b or may be integrally formed with the components 68a/68b. The legs 364al/364a2 merge to a common second section 64b. Thus, the thermal energy accepted by the legs 364al/364a2 is commonly dissipated through second section 364b.

Figure 5 illustrates another example gas turbine engine 420. In this example, not forming part of the present invention, the engine 420 includes a heat pipe 464 that has a first section 464a associated with the component 68 and a second section 464b associated with acooling cavity 462. In this example, the cooling cavity 462 is outside of (i.e., not in) the bypass duct 31, but rather than being between the core nacelle 29a and the core flow path C, the cooling cavity 462 is radially outwards of the bypass duct 31. For instance, the cooling cavity 462 is in the nacelle 33. Here, the heat pipe 464 includes a leg 464c that extends forwardly and into a guide vane 472 of the bypass duct 31. The guide vane 472 extends from a radially outer wall of the bypass duct 31, such as the nacelle 33, to at least the core nacelle 29a. The leg 464c of the heat pipe 464 extends through the guide vane 472 and into the cooling cavity 462. The leg 464c connects to the second section 464b of the heat pipe 464, which is in the cooling cavity 462. The leg 464c may serve as an additional second section of the heat pipe 464 for dissipating thermal energy

In this example, there is a tap 470 from the bypass duct 31 at a location forward or upstream of the second section 464b. The tap 70 may include a valve 70a or similar device that is operable to control the flow of the bleed air from the bypass duct 31 to the cooling cavity 462. The cooling cavity 462 also includes one or more discharge ports 462a that open into the bypass duct 31 for thrust recovery as described elsewhere herein.

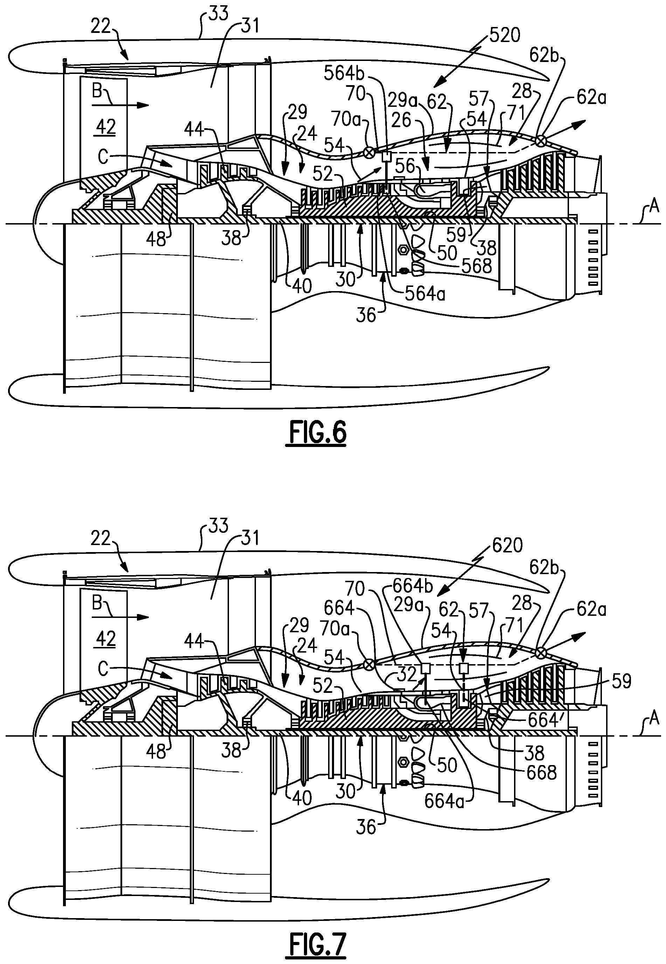

Figure 6 illustrates another example gas turbine engine 520. In this example, not forming part of the present invention, the engine 520 includes a heat pipe 564 that is associated with a component 568. For instance, the component 568 is a vane in the compressor section 24 of the engine 520. In a further example, the vane 568 is in a final one or two stages of the compressor section 24. At those stages, due to compression of air in the core flow path C, the temperatures are relatively high and there thus may be a need to remove thermal energy from the compressed air prior to injection of the air into the combustor 56. In this regard, the first section 564a of the heat pipe 564 may be associated with or at least partially in the vane 568. The second section 564b is associated with or at least partially in the cooling cavity 62 such that bleed air provided by the tap 70 facilitates removal of the thermal energy, as generally described above.

Figure 7 illustrates another example gas turbine engine 620. In this example, not forming part of the present invention, the engine 620 includes a heat pipe 664 that is associated with a component 668 of the core engine 29. Here, rather than a vane or other static structure of the core engine 29, the component 668 is the combustor 56. For instance, the first section 664a of the heat pipe 664 is associated with or at least partially in the combustor 56 or a wall of the combustor 56, and the second section 664b is associated with or at least partially in the cooling cavity 62. Bleed air provided by the tap 70 facilitates the removal of the thermal energy from the second section 664b, as generally described above. Additionally or alternatively, the heat pipe may be aft of the combustor 56 in the mid-turbine frame 57, as shown at 664'. For instance, the heat pipe 664' is associated with or at least partially in a diffuser vane or wall in the mid-turbine frame 57.

Figure 8 illustrates selected portions of another example gas turbine engine 720. In this example, the engine 720 includes an environmentally-controllable cavity 762 that is disposed outside of (i.e., not in) the core flowpath C and outside of (i.e., not in) the bypass duct 31. The engine 720 includes a heat pipe 764 that has a first section 764a associated with or at least partially in a component 768 of the engine 720 and a second section 764b associated with or at least partially in the environmentally-controllable cavity 762. The first section 764a of the heat pipe 764 is configured to accept thermal energy, and the second section 764b is configured to dissipate the thermal energy in the environmentally-controllable cavity 762. The environmentally-controllable cavity 762 is operational to adjust an environment, represented at E, to thereby variably dissipate the thermal energy from the second section 764b. As an example, the environment in the environmentally-controllable cavity 762 may be controlled by a controller, valving, and the like, to adjust air flow or pressure of the environment. By adjusting the flow or pressure, the thermal energy removal capacity of the environmentally-controllable cavity to receive and dissipate the thermal energy from the second section 764b can be varied. Thus, if bleed air is used to control the environment E, the bleed air can be selectively provided at a greater flow when there is a greater need for removal of the thermal energy and can be provided at a lesser flow or no flow when there is a lesser need or no need for dissipation of the thermal energy. For instance, if the component 768a is a vane in the compressor section of an engine, there may be varying needs for thermal dissipation.

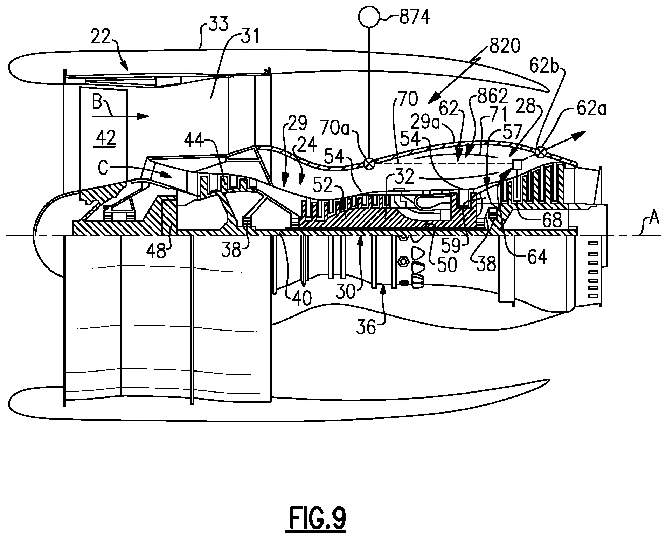

Figure 9 illustrates another example of a gas turbine engine 820. In this example, not forming part of the present invention, the engine 820 includes an environmentally-controllable cavity 862 that is disposed outside of (i.e., not in) the core flowpath C and outside of (i.e., not in) the bypass duct 31. Here, the valve 70a, the valve 62b, the tap 70, or any combination of these, is in communication with a controller 874. For instance, the controller 874 includes hardware, software, or both that can be programmed to control the operation of the valves 62b/70a to thus control the bleed flow provided by the tap 70. As an example, the controller 874 may be configured to adjust the environment in the environmentally-controllable cavity 862 based on a temperature of the component 68. The temperature of the component 68 may be an actual detected temperature, or may be a temperature that is calculated or determined based on engine information or estimates based upon engine operating conditions (e.g., take-off, cruise, landing).

Figure 10 illustrates another example gas turbine engine 920, which may be configured similar to the prior example engines. Here, the engine 920 includes a component 968 disposed in the core engine 29a. A tap 970 is configured to provide bleed air from the compressor section 24 in accordance with the present invention, or, in an embodiment not forming part of the present invention, from a location outside of the core engine 29a. For instance, the location may be from an air flow outside of the core engine 29a. In an open rotor engine this may be from air flow around the engine or in a ducted engine this may be from a bypass duct, such as the bypass duct 31. A heat pipe 964 includes a first section 964a that is configured to accept thermal energy and a second section 964b that is configured to dissipate the thermal energy to the bleed air from the tap 970. For instance, the second section 964b is at least partially exposed to the bleed air from the tap 970 such that the bleed air flows over and removes thermal energy from the second section 964b. The bleed air can then be discharged into the bypass duct 31 for thrust recovery.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine comprising:
a core nacelle (29a);
a core engine (29) disposed in the core nacelle (29a), the core engine (29) including at least a compressor section (24), a combustor section (26), and a turbine section (28), which define a core flow path;
a bypass duct (31) radially outwards of the core nacelle (29a);
a component (68) disposed in the core engine (29);
a cooling cavity (62) disposed outside of the bypass duct (31);
a heat pipe (64) containing a working medium (66) sealed therein, the heat pipe (64) including a first section (64a) configured to accept thermal energy from the component (68) and/or transferred from the hot combustion gases in the core gas path and a second section (64b) configured to dissipate the thermal energy in the cooling cavity (62),
**characterized by**:
a tap (70) from the compressor section (24), the tap (70) configured to provide bleed air to the cooling cavity (62) and dissipate the thermal energy from the second section (64b), wherein the core nacelle (29a) defines an outer boundary of the cooling cavity (62).

2. The gas turbine engine as recited in claim 1, wherein the cooling cavity (62) includes a discharge port (62a) that opens into the bypass duct (31).

3. The gas turbine engine as recited in claim 2, wherein the core nacelle (29a) includes an aft-sloped wall section (29a1), and the discharge port (62a) is in the aft-sloped wall section (29a1).

4. The gas turbine engine as recited in any preceding claim, wherein the first section (64a) includes at least two legs (364a1, 364a2) that are axially separated.

5. The gas turbine engine as recited in any preceding claim, wherein the second section (64b) is axially offset from the first section (64a).

6. The gas turbine engine as recited in any preceding claim, wherein the component (68) is a static component.

7. The gas turbine engine as recited in any preceding claim, wherein the tap (70) includes an annular flow guide or passage.

## Patentansprüche

1. Gasturbinenmotor, umfassend:
eine Kerntriebwerksgondel (29a);
einen Kernmotor (29), der in der Kerntriebwerksgondel (29a) angeordnet ist, wobei der Kernmotor (29) mindestens einen Verdichterbereich (24), einen Brennkammerbereich (26) und einen Turbinenbereich (28) beinhaltet, die einen Kernströmungspfad definieren;
eine Bypassleitung (31) radial außerhalb der Kerntriebwerksgondel (29a);
eine Komponente (68), die in dem Kernmotor (29) angeordnet ist;
einen Kühlhohlraum (62), der außerhalb der Bypassleitung (31) angeordnet ist;
ein Wärmerohr (64), das ein darin abgedichtetes Arbeitsmedium (66) enthält, wobei das Wärmerohr (64) einen ersten Bereich (64a), der dazu konfiguriert ist, Wärmeenergie von der Komponente (68) und/oder von den heißen Verbrennungsgasen in dem Kerngaspfad übertragene Wärmeenergie aufzunehmen, und einen zweiten Bereich (64b), der dazu konfiguriert ist, die Wärmeenergie in dem Kühlhohlraum (62) abzuleiten, beinhaltet,
**gekennzeichnet durch**:
eine Zapfstelle (70) aus dem Verdichterbereich (24), wobei die Zapfstelle (70) dazu konfiguriert ist, dem Kühlhohlraum (62) Zapfluft bereitzustellen und die Wärmeenergie von dem zweiten Bereich (64b) abzuleiten, wobei die Kerntriebwerksgondel (29a) eine Außenbegrenzung des Kühlhohlraums (62) definiert.

2. Gasturbinenmotor nach Anspruch 1, wobei der Kühlhohlraum (62) einen Auslaufstutzen (62a) beinhaltet, der in die Bypassleitung (31) mündet.

3. Gasturbinenmotor nach Anspruch 2, wobei die Kerntriebwerksgondel (29a) einen nach hinten geneigten Wandbereich (29a1) beinhaltet und sich der Auslaufstutzen (62a) in dem nach hinten geneigten Wandbereich (29a1) befindet.

4. Gasturbinenmotor nach einem der vorstehenden Ansprüche, wobei der erste Bereich (64a) mindestens zwei Abschnitte (364a1, 364a2) beinhaltet, die axial getrennt sind.

5. Gasturbinenmotor nach einem der vorstehenden Ansprüche, wobei der zweite Bereich (64b) axial vom ersten Bereich (64a) versetzt ist.

6. Gasturbinenmotor nach einem der vorstehenden Ansprüche, wobei die Komponente (68) eine statische Komponente ist.

7. Gasturbinenmotor nach einem der vorstehenden Ansprüche, wobei die Zapfstelle (70) eine ringförmige Strömungsführung oder einen ringförmigen Strömungsdurchgang beinhaltet.

## Revendications

1. Moteur à turbine à gaz comprenant :
une nacelle centrale (29a) ;
un moteur central (29) disposé dans la nacelle centrale (29a), le moteur central (29) comportant au moins une section de compresseur (24), une section de chambre de combustion (26) et une section de turbine (28), qui définissent un chemin d'écoulement central ;
un conduit de dérivation (31) radialement à l'extérieur de la nacelle centrale (29a) ;
un composant (68) disposé dans le moteur central (29) ;
une cavité de refroidissement (62) disposée à l'extérieur du conduit de dérivation (31) ;
un caloduc (64) contenant un milieu de travail (66) scellé à l'intérieur, le caloduc (64) comportant une première section (64a) configurée pour accepter l'énergie thermique du composant (68) et/ou transférée des gaz de combustion chauds dans le chemin de gaz central et
une seconde section (64b) configurée pour dissiper l'énergie thermique dans la cavité de refroidissement (62),
**caractérisé par** :
un robinet (70) de la section de compresseur (24), le robinet (70) étant configuré pour fournir de l'air de purge à la cavité de refroidissement (62) et dissiper l'énergie thermique de la seconde section (64b), dans lequel la nacelle centrale (29a) définit une limite extérieure de la cavité de refroidissement (62).

2. Moteur à turbine à gaz selon la revendication 1, dans lequel la cavité de refroidissement (62) comporte un orifice de décharge (62a) qui débouche dans le conduit de dérivation (31).

3. Moteur à turbine à gaz selon la revendication 2, dans lequel la nacelle centrale (29a) comporte une section de paroi inclinée vers l'arrière (29a1), et l'orifice de décharge (62a) se trouve dans la section de paroi inclinée vers l'arrière (29a1).

4. Moteur à turbine à gaz selon une quelconque revendication précédente, dans lequel la première section (64a) comporte au moins deux jambes (364a1, 364a2) qui sont séparées axialement.

5. Moteur à turbine à gaz selon une quelconque revendication précédente, dans lequel la seconde section (64b) est décalée axialement par rapport à la première section (64a).

6. Moteur à turbine à gaz selon une quelconque revendication précédente, dans lequel le composant (68) est un composant statique.

7. Moteur à turbine à gaz selon une quelconque revendication précédente, dans lequel le robinet (70) comporte un guide d'écoulement ou un passage annulaire.
